# EUROPEAN PATENT SPECIFICATION

(11) **EP 1 511 375 B1**
(45) Date of publication and mention of the grant of the patent: **18.10.2006**
(21) Application number: 03730142.1
(22) Date of filing: 30.05.2003
(51) Int. Cl.: A01K 13/00, A01K 1/02

(54) **JACKET FOR DOMESTIC ANIMALS**
VESTE FÜR HAUSTIER
MANTEAU POUR ANIMAUX DOMESTIQUES

(30) Priority: 31.05.2002 EP 02425357
(43) Date of publication of application: 09.03.2005
(73) Proprietor: CIUFFO GATTO S.r.L., 10138 Torino (IT)
(72) Inventor: LEO, Franca, I-10138 Torino (IT)
(74) Representative: Gerbino, Angelo
(86) International application number: PCT/EP2003/005687
(87) International publication number: WO 2003/101186

(56) References cited:
- EP-A- 0 901 750
- EP-A- 1 332 669
- DE-U- 29 701 118
- US-A- 1 333 618
- US-A- 4 644 902
- US-A- 5 671 698
- US-A- 5 970 921
- US-A- 6 123 049

## Description

The present invention relates to a jacket for domestic animals, in particular small and medium-sized dogs and cats.

Such a jacket comprises a flexible element which is intended to extend round the body of the animal in order to serve as protection from the effects of atmospheric agents and optionally to allow one end of a leash to be attached. More particularly, such a jacket has the features indicated in the preamble of claim 1 which follows. A known jacket of this kind is disclosed in the prior art document US-A-6 123 049.

The object of the present invention is to provide a jacket of the type described above in order to fulfil further functions in addition to the ones described above.

According to the invention, this object is achieved by means of a jacket having the features which are specifically referred to in the appended main claim. Preferred features of the jacket of the invention are indicated in the dependent claims.

Other advantages and characteristics of the present invention will become clear from the following detailed description, which is given purely by way of non-limiting example with reference to the appended drawings, in which:
Figure 1 is a plan view of a jacket not according to the invention in an unfolded, non-operative configuration,
Figure 2 is a perspective view of the jacket from Figure 1 in a tubular configuration,
Figure 3 is a perspective view of the jacket from the preceding Figures as worn by an animal,
Figure 4 is a perspective view of a detail of a jacket according to the invention,
Figure 5 is a perspective view of the details in Figure 4 in a different configuration, and
Figures 6 to 8 are sectional views of some components of the jacket in Figures 4 and 5 in respective operative positions.

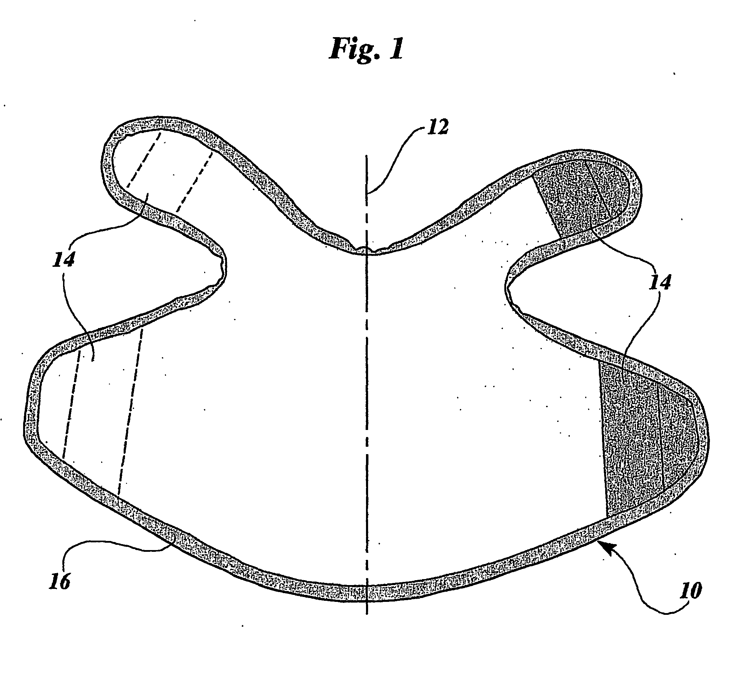

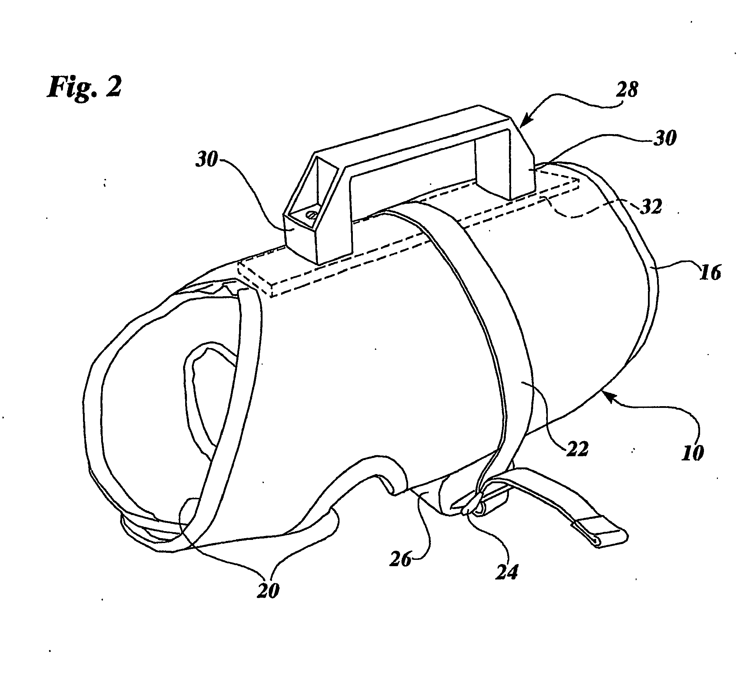

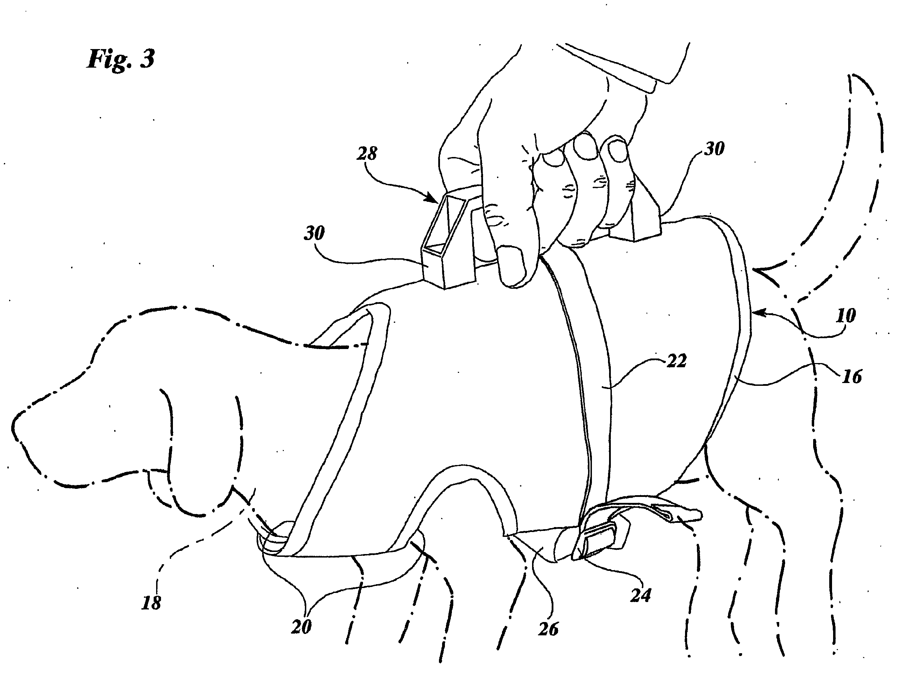

A jacket for domestic animals, in particular small and medium-sized dogs and cats, comprises (Figure 1) a flexible element which is in the form of a sheet 10 of substantially symmetrical shape relative to a central longitudinal axis 12 and having end tongues which are provided with mutual attachment means 14 of the micro-hook or Velcro type. The sheet 10 can be produced: from any flexible material which is suitable for contact with the skin of animals, for example, a fabric a non-woven fabric an expanded plastics material, or the like, and can optionally have a layered structure and /or have cavities on the inside. The external perimeter of the sheet 10 is further fitted with padding 16. Owing to the flexibility of the sheet 10 the shape thereof and the presence of attachment means 14, it is possible (Figures 2 and 3) to fold it into a substantially tubular configuration, in which it extends round the body of the animal 18 and leaves openings 20 for the passage of the paws and the head of the animal. A strap 22 is further associated with the external surface of the sheet 10 and is provided with a buckle 24 for closing and adjusting the length, which strap is orientated substantially coaxially with the sheet 10 when the sheet 10 takes up the tubular configuration. The strap 22 can be used to attach various articles to the jacket, for example, a small bag 26 for containing small cloths.

A handle 28 having a C-shaped body, the ends 30 of which are secured to a reinforcing bar 32 which is inserted inside the sheet 10, is associated with the external surface of the portion of the sheet 10 that is intended, in normal use, to be contiguous to the back of the animal 18 (i.e. the central portion of the sheet 10, which is remote from the ends thereof with the attachment means 14).

The jacket is worn by the animal 18 in a conventional manner in order to perform its typical functions of protection from the effects of atmospheric agents, insects, and the like, which do not involve the presence of the handle 28. When the animal 18 has to be carried form example, in order to prevent it from soiling given surroundings or to allow it to overcome obstacles, it is sufficient (Figure 3) to grasp the handle 28 and to apply a lifting action. The flexible sheet 10 thereby acts as a harness, allowing convenient and comfortable carrying both-for the animal 18, since the force which supports it is discharged homogeneously over the stomach of the animal, and for the person who is grasping the handle 28 and who is therefore aided in supporting the weight thereof. For greater security during carrying, it is further convenient to lighten the strap 22 beforehand so that the animal 18 remains held tightly in the flexible sheet 10 without being able to free itself.

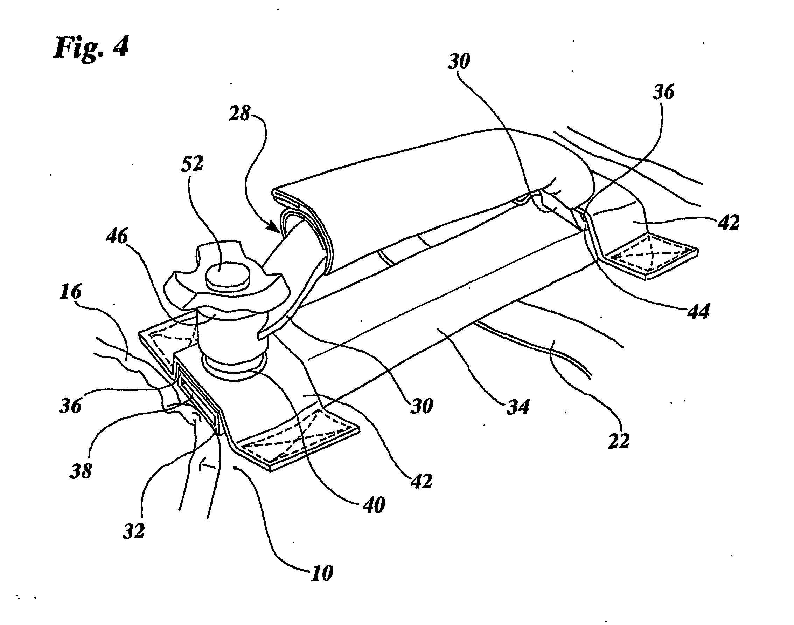

Figures 4 to 8 illustrate a jacket according to the invention, wherein numerals identical to those used with reference to the preceding Figures 1 to 3 refer to identical or equivalent elements.

The structure and the general function of the jacket remain substantially unchanged relative to the above description with reference to the first embodiment. In this case, however, the handle 28 is provided with means which can allow the selective disengagement thereof from the flexible sheet 10.

A substantially rectangular strip of fabric 34 is fixed, in particular sewn, along the long sides thereof to the central region of the sheet 10. The reinforcing bar 32 has raised ends 36 and is inserted between the strip 34 and the facing region of the sheet 10 in such a manner that the ends 36 project outside the strip 34 and prevent the bar 32 from sliding.

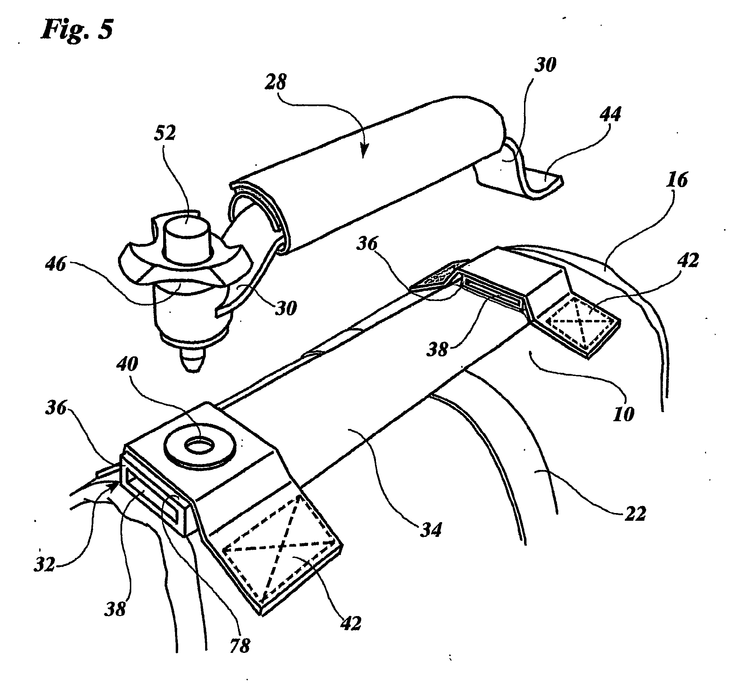

Both of the ends 36 have (Figures 4 and 5) respective longitudinal holes 38 which are orientated substantially parallel with the bar 32. Furthermore, the front end 36 has an opening 40 which is orientated substantially transversely relative to the bar 32 in a vertical direction and which communicates with the respective longitudinal hole 38.

A first strap and a second strap 42 which are suitable for securing the respective ends 36 of the bar 32 are further fixed to the sheet 10 transversely relative to the bar 32.

The handle 28 has a C-shaped body with the central piece padded, a rear end from which projects an end piece 44 which is inserted into the rear hole 38 of the bar 32 and a front end which is integral with a sleeve 46 provided with means which can be engaged selectively with the opening 40 and the front hole 38 of the bar 32.

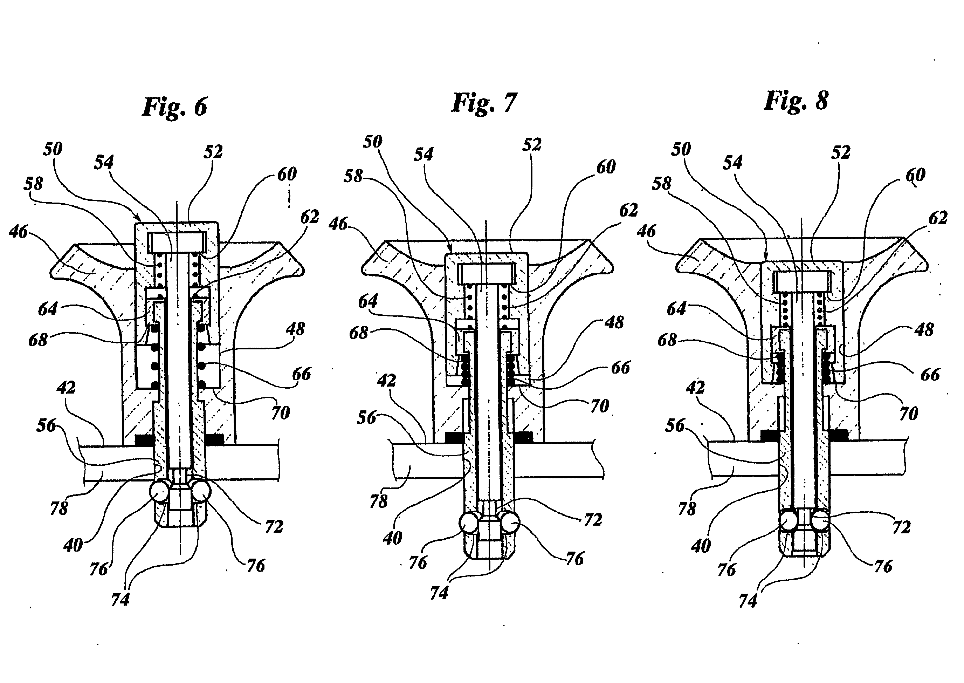

The sleeve 46 has (Figure 6) a cavity 48 which extends vertically in an axial direction and in which a slide 50 is mounted for sliding, which slide 50 comprises a head 52 which can be activated from outside, a shank 54 which is integral with the head 52 and a tubular element 56 which is mounted coaxially outside the central and distal portions of the shank 54. A first resilient member 58 is arranged between a radial shoulder 60 of the shank 54 and a first radially extending locating surface 62 of a flange 64 which is integral with the tubular element 56, and a second resilient member 66 which is more flexible than the first resilient member 58 is arranged between a second radially extending locating surface 68 of the flange 64 and an abutment surface 70 of the sleeve 46. The distal end of the shank 54 further has a circumferential channel 72 and the distal end of the tubular element 56 has, at diametrically opposing positions, a pair of radial cavities 74, in which are arranged respective spherical retaining members 76.

Under normal conditions (Figure 6), the distal end of the slide 50 projects from the sleeve 46 and extends through the vertical opening 40 of the front end 36 of the bar 32, with the shank 54 in a retracted position inside the tubular element 56. As a result, the spheres 76 project outside the tubular element and engage against the wall 78 surrounding the opening 40 of the bar 32 in such a manner that the handle 28 is secured to the sheet 10 (Figure 4).

If instead it is decided to separate the handle 28 from the sheet 10, it is necessary to press the head 52 of the slide 50 downwards in the manner of a push-button. Since the second resilient member 66 is more flexible than the first 58, it is compressed first and the whole slide 50 slides downwards, releasing the spheres 76 from contact with the wall 78 (Figure 7). Further pressure on the head 52 also causes compression of the first resilient member 58 and sliding of the shank 54 relative to the tubular element 56, in such a manner that the circumferential channel 72 is aligned with the cavities 74 and allows the spheres 76 to re-enter the tubular element 56 (Figure 8) completely. Therefore, the slide 50 is no longer engaged with the wall 78 so that it is possible to release the front end of the handle 28 from the front end 36 of the bar 32 following a simple lifting action. Afterwards, by pulling the handle 28 forwards, the end piece 44 thereof is released from the rear hole 38 of the bar 32. The handle 28 is thereby completely disengaged from the holes 38 of the bar 32, and therefore from the sheet 10 (Figure 5).

This separation can be advantageously used in order not to burden the animal 18 with the weight of the handle 28 when the animal is walking independently when wearing the jacket. If instead it is necessary to carry the animal 18, it is simply sufficient to re-attach the handle 28 to the bar 32 which is integral with the flexible sheet 10 by repeating in reverse order the operations described above. In this manner, the handle 28 constitutes a handle grip for the sheet 10 which functions as a harness for the animal 18 similarly to that mentioned with reference to the first embodiment of the jacket.

Naturally, the principle of the invention remaining the same, the forms of embodiment and details of construction may be varied widely with respect to those described and illustrated, which have been given purely by way of example, without thereby departing from the scope of the invention. In particular, the flexible element and the handle could be substantially of any shape.

## Claims

1. A jacket for domestic animals (18), in particular small and mediucn-sized dogs and cats; comprising a flexible element which is intended to extend round the body of the animal (18) and wherein a handle (28), which can allow the animal (18) to be carried by the person holding it, is associated with the external surface of the portion of the flexible element that is intended, in normal use, to be contiguous to the back of the animal (18), said jacket being **characterized in that** the handle (28) is provided with means which can allow the selective disengagement thereof from the flexible element.

2. A jacket according to claim 1, **characterized in that** the flexible element is a sheet (10) of flexible material having, at the ends, mutual attachment means (14) which allow it to be folded into a substantially tubular configuration, in which it extends round the body of the animal (18), and the handle (28) is arranged on the external surface of the central portion of the sheet (10).

3. A jacket according to claim 2, **characterized in that** said sheet (10) has openings (20) for the passage of the paws and the head of the animal and the means for mutual attachment (14) are of the micro-hook type.

4. A jacket according to any one of the preceding claims, **characterized in that** a strap (22) which is provided with a buckle (24) for closing and adjusting the length is associated with the external surface of the flexible element.

5. A jacket according to any one of the preceding claims, **characterized in that** the handle (28) has a C-shaped body.

6. A jacket according to any one of the preceding claims, **characterized in that** the flexible element is provided with a reinforcing bar (32).

7. A jacket according to claim 6, **characterized in that** a strip of substantially rectangular fabric (34) is fixed along the long sides thereof to the sheet (10) and the reinforcing bar (32) has raised ends (36) and is inserted between the strip (34) and the facing sheet portion (10) in such a manner that the ends (36) project outside the strip (34) and prevent the bar (32) from sliding.

8. A jacket according to claim 6 or 7, **characterized in that** both of the ends (36) of the bar (32) have respective longitudinal holes (38) which are orientated substantially parallel with the bar (32) and the front end further has an opening (40) which is orientated substantially transversely relative to the bar (32) in a vertical direction and which communicates with the respective hole (38).

9. A jacket according to any one of claims 6 to 8, **characterized in that** a first strap and a second strap (42) which are suitable for securing the respective ends (36) of the bar (32) are fixed to the sheet (10) transversely relative to the bar (32).

10. A jacket according to claim 8 or 9, **characterized in that** the handle (28) has a C-shaped body having a rear end, from which projects an end piece (44) which can be inserted into the hole (38) of the rear end (36) of the bar (32) and a front end which is integral with a sleeve (46) provided with means which can be engaged selectively with the opening (40) and the hole (38) of the front end (36) of the bar (32).

11. A jacket according to claim 10, **characterized in that** the sleeve (46) has a cavity (48) which extends vertically in an axial direction and in which a slide (50) is mounted for sliding, which slide comprises a head (52) which can be activated from outside, a shank (54) which is integral with the head (52) and a tubular element (56) which is mounted coaxially outside the central and distal portions of the shank (54), a first resilient member (58) being arranged between a radial shoulder (60) of the shank (54) and a first radially extending locating surface (62) of a flange (64) which is integral with the tubular element (56), a second resilient member (66) which is more flexible than the first resilient member (58) being arranged between a second radially extending locating surface (68) of the flange (64) and an abutment surface (70) of the sleeve (46), the distal end of the shank (54) having a circumferential channel (72) and the distal end of the tubular element (56) having at least one radial cavity (74), in which is arranged a retaining member which can project partially outside the tubular element (56).

12. A jacket according to claim 11, **characterized in that** the distal end of the tubular element (56) has, at diametrically opposing positions, a pair of radial cavities (74), in which are arranged respective spherical retaining members (76).

## Patentansprüche

1. Mantel für Haustiere (18), insbesondere kleine und mittelgroße Hunde und Katzen, umfassend ein biegsames Element, das dazu bestimmt ist, sich um den Körper des Tieres (18) herum zu erstrecken, und wobei ein Griff (28), welcher der ihn haltenden Person das Tragen des Tieres (18) ermöglichen kann, mit der Außenfläche jenes Teils des biegsamen Elements verbunden ist, der dazu bestimmt ist, bei normaler Verwendung am Rücken des Tieres (18) anzuliegen, wobei der Mantel **dadurch gekennzeichnet ist, dass** der Griff (28) mit Mitteln versehen ist, die sein gezieltes Loslösen vom biegsamen Element ermöglichen können.

2. Mantel gemäß Anspruch 1, **dadurch gekennzeichnet, dass** das biegsame Element eine dünne Lage (10) aus biegsamem Material ist, die an den Enden Mittel (14) zum gegenseitigen Befestigen aufweist, welche ermöglichen, dass sie in eine im Wesentlichen röhrenförmige Konfiguration gefaltet wird, in der sie sich um den Körper des Tieres (18) herum erstreckt, und der Griff (28) an der Außenfläche des zentralen Teils der dünnen Lage (10) angeordnet ist.

3. Mantel gemäß Anspruch 2, **dadurch gekennzeichnet, dass** die dünne Lage (10) Öffnungen (20) zum Hindurchstecken der Pfoten und des Kopfs des Tieres aufweist und die Mittel zum gegenseitigen Befestigen (14) als Mikrohaken ausgeführt sind.

4. Mantel gemäß einem der vorhergehenden Ansprüche, **dadurch gekennzeichnet, dass** ein Riemen (22), der mit einer Schnalle (24) zum Verschließen und zum Einstellen der Länge versehen ist, mit der Außenfläche des biegsamen Elements verbunden ist.

5. Mantel gemäß einem der vorhergehenden Ansprüche, **dadurch gekennzeichnet, dass** der Griff (28) einen C-förmigen Aufbau aufweist.

6. Mantel gemäß einem der vorhergehenden Ansprüche, **dadurch gekennzeichnet, dass** das biegsame Element mit einer Verstärkungsleiste (32) versehen ist.

7. Mantel gemäß Anspruch 6, **dadurch gekennzeichnet, dass** ein Streifen eines im Wesentlichen rechteckigen Stoffes (34) entlang seiner Längsseiten an der dünnen Lage (10) befestigt ist und die Verstärkungsleiste (32) erhöhte Enden (36) aufweist und zwischen dem Streifen (34) und dem gegenüberliegenden Lagenteil (10) solcherart eingefügt ist, dass die Enden (36) aus dem Streifen (34) herausragen und ein Verrutschen der Leiste (32) verhindern.

8. Mantel gemäß Anspruch 6 oder 7, **dadurch gekennzeichnet, dass** die beiden Enden (36) der Leiste (32) jeweils ein Längsloch (38) aufweisen, das im Wesentlichen parallel zur Leiste (32) ausgerichtet ist, und das vordere Ende weiters eine Öffnung (40) aufweist, die im Wesentlichen quer zur Leiste (32) in einer vertikalen Richtung ausgerichtet ist und mit dem entsprechenden Loch (38) in Verbindung steht.

9. Mantel gemäß einem der Ansprüche 6 bis 8, **dadurch gekennzeichnet, dass** ein erster Riemen und ein zweiter Riemen (42), die zum Befestigen der jeweiligen Enden (36) der Leiste (32) geeignet sind, quer zur Leiste (32) an der Lage (10) angebracht sind.

10. Mantel gemäß Anspruch 8 oder 9, **dadurch gekennzeichnet, dass** der Griff (28) einen C-förmigen Aufbau aufweist, welcher ein hinteres Ende besitzt, aus dem ein Endstück (44) ragt, das in das Loch (38) des hinteren Endes (36) der Leiste (32) eingeführt werden kann, sowie ein vorderes Ende, das mit einer Buchse (46) integral ist, welche mit Mitteln versehen ist, die gezielt in der Öffnung (40) und im Loch (38) des vorderen Endes (36) der Leiste (32) in Eingriff gebracht werden können.

11. Mantel gemäß Anspruch 10, **dadurch gekennzeichnet, dass** die Buchse (46) einen Hohlraum (48) aufweist, der sich vertikal in einer axialen Richtung erstreckt und in dem ein Schieber (50) zum Verschieben angebracht ist, welcher Schieber einen Kopf (52) umfasst, der von außen aktiviert werden kann, einen Schaft (54), der mit dem Kopf (52) integral ist, sowie ein röhrenförmiges Element (56), das außerhalb des zentralen und des distalen Teils des Schafts (54) koaxial montiert ist, wobei ein erstes elastisches Bauglied (58) zwischen einer radialen Schulter (60) des Schafts (54) und einer ersten, sich radial erstreckenden Passfläche (62) eines mit dem röhrenförmigen Element (56) integralen Flansches (64) angeordnet ist, und ein zweites elastisches Bauglied (66), das biegsamer als das erste elastische Bauglied (58) ist, zwischen einer zweiten, sich radial erstreckenden Passfläche (68) des Flansches (64) und einer Widerlagerfläche (70) der Buchse (46) angeordnet ist, wobei das distale Ende des Schafts (54) einen Umfangskanal (72) aufweist und das distale Ende des röhrenförmigen Elements (56) zumindest einen radialen Hohlraum (74) aufweist, in dem ein Halteglied angeordnet ist, das aus dem röhrenförmigen Element (56) teilweise herausragen kann.

12. Mantel gemäß Anspruch 11, **dadurch gekennzeichnet, dass** das distale Ende des röhrenförmigen Elements (56) an diametral entgegengesetzten Positionen ein Paar von radialen Hohlräumen (74) aufweist, in denen jeweils kugelförmige Halteglieder (76) angeordnet sind.

## Revendications

1. Manteau pour animaux domestiques (18), en particulier des chiens et des chats de taille moyenne et de petite taille, comprenant un élément flexible qui est destiné à s'étendre autour du corps de l'animal (18) et dans lequel une poignée (28), qui peut permettre à l'animal (18) d'être transporté par la personne la tenant, est associée à la surface externe de la portion de l'élément flexible qui est destinée, dans une utilisation normale, à être contiguë au dos de l'animal (18), ledit manteau étant **caractérisé en ce que** la poignée (28) est pourvue d'un moyen qui peut permettre son désengagement sélectif d'avec l'élément flexible.

2. Manteau selon la revendication 1, **caractérisé en ce que** l'élément flexible est une feuille (10) de matériau flexible comportant, aux extrémités, des moyens de fixation mutuelle (14) qui lui permettent d'être pliée en une configuration sensiblement tubulaire, dans laquelle elle s'étend autour du corps de l'animal (18), et la poignée (28) est agencée sur la surface externe de la portion centrale de la feuille (10).

3. Manteau selon la revendication 2, **caractérisé en ce que** ladite feuille (10) comporte des ouvertures (20) pour le passage des pattes et de la tête de l'animal et les moyens pour une fixation mutuelle (14) sont du type à micro crochets.

4. Manteau selon l'une quelconque des revendications précédentes, **caractérisé en ce qu'**une sangle (22), qui est pourvue d'une boucle (24) de fermeture et de réglage de la longueur, est associée à la surface externe de l'élément flexible.

5. Manteau selon l'une quelconque des revendications précédentes, **caractérisé en ce que** la poignée (28) a un corps en forme de C.

6. Manteau selon l'une quelconque des revendications précédentes, **caractérisé en ce que** l'élément flexible est pourvu d'une barre de renfort (32).

7. Manteau selon la revendication 6, **caractérisé en ce qu'**une bande d'étoffe (34) sensiblement, rectangulaire est fixée, par ses côtés longs, à la feuille (10) et la barre de renfort (32) comporte des extrémités exhaussées (36) et est insérée entre la bande (34) et la portion de feuille (10) extérieure de manière que les extrémités (36) fassent saillie à l'extérieur de la bande (34) et empêchent la barre (32) de glisser.

8. Manteau selon la revendication 6 ou 7, **caractérisé en ce que** les deux extrémités (36) de la barre (32) comportent des trous longitudinaux (38) respectifs qui sont orientés sensiblement parallèlement à la barre (32) et l'extrémité avant comporte, en outre, une ouverture (40) qui est orientée sensiblement transversalement par rapport à la barre (32) dans une direction verticale et qui communique avec le trou (38) respectif.

9. Manteau selon l'une quelconque des revendications 6 à 8, **caractérisé en ce qu'**une première sangle et une deuxième sangle (42) qui sont appropriées pour fixer les extrémités (36) respectives de la barre (32) sont fixées à la feuille (10) transversalement par rapport à la barre (32).

10. Manteau selon la revendication 8 ou 9, **caractérisé en ce que** la poignée (28) a un corps en forme de C, comportant une extrémité arrière depuis laquelle fait saillie une pièce d'extrémité (44) qui peut être insérée dans le trou (38) de l'extrémité arrière (36) de la barre (32) et une extrémité avant qui est d'un seul tenant avec un manchon (46) pourvu de moyens qui peuvent être engagés sélectivement avec l'ouverture (40) et le trou (38) de l'extrémité avant (36) de la barre (32).

11. Manteau selon la revendication 10, **caractérisé en ce que** le manchon (46) comporte une cavité (48) qui s'étend verticalement dans une direction axiale et dans laquelle une glissière (50) est montée pour glissement, laquelle glissière comprend une tête (52) qui peut être actionnée depuis l'extérieur, une tige (54) qui est d'un seul tenant avec la tête (52) et un élément tubulaire (56) qui est monté coaxialement à l'extérieur des portions centrale et distale de la tige (54), un premier élément élastique (58) étant agencé entre un épaulement radial (60) de la tige (54) et une première surface de positionnement s'étendant radialement (62) d'un rebord (64) qui est d'un seul tenant avec l'élément tubulaire (56), un deuxième élément élastique (66), qui est davantage flexible que le premier élément élastique (58), étant agencé entre une deuxième surface de positionnement s'étendant radialement (68) du rebord (64) et une surface de butée (70) du manchon (46), l'extrémité distale de la tige (54) comportant un canal circonférentiel (72) et l'extrémité distale de l'élément tubulaire (56) comportant au moins une cavité radiale (74), dans laquelle est agencé un élément de retenue qui peut faire saillie partiellement à l'extérieur de l'élément tubulaire (56).

12. Manteau selon la revendication 11, **caractérisé en ce que** l'extrémité distale de l'élément tubulaire (56) comporte, en des positions diamétralement opposées, une paire de cavités radiales (74), dans lesquelles sont agencés des éléments de retenue sphériques (76) respectifs.
